# EUROPÄISCHE PATENTSCHRIFT

(11) **EP 3 613 515 B1**
(45) Veröffentlichungstag und Bekanntmachung des Hinweises auf die Patenterteilung: **27.10.2021**
(21) Anmeldenummer: 18189802.4
(22) Anmeldetag: 20.08.2018
(51) Int. Cl.: B07B 4/08, B07B 7/086, B07B 9/00

(54) **SCHÜTTGUTREINIGUNGSVORRICHTUNG MIT INTEGRIERTEM LUFTABSCHEIDER SOWIE SCHÜTTGUTREINIGUNGSVORRICHTUNG MIT EINEM HOHLEN TRAGRAHMEN**
BULK MATERIAL CLEANING DEVICE WITH INTEGRATED AIR SEPARATOR AND BULK MATERIAL CLEANING DEVICE WITH A HOLLOW SUPPORT FRAME
DISPOSITIF DE NETTOYAGE DE PRODUIT EN VRAC POURVU DE SÉPARATEUR D'AIRE INTÉGRÉ AINSI QUE DISPOSITIF DE NETTOYAGE DE PRODUIT EN VRAC POURVU D'UN CADRE DE SUPPORT CREUX

(43) Veröffentlichungstag der Anmeldung: 26.02.2020
(60) Teilanmeldung: 20192784.5
(73) Patentinhaber: Bühler AG, 9240 Uzwil (CH)
(72) Erfinder: Haag, Roman, 8360 Eschlikon (CH); Moosmann, Jürgen, 88276 Berg (DE)
(74) Vertreter: Hepp Wenger Ryffel AG

(56) Entgegenhaltungen:
- EP-A1- 0 694 341
- EP-A2- 0 155 556
- WO-A1-88/04204
- CH-A- 422 491
- DE-A1- 4 113 093
- DE-B1- 2 950 217
- US-A- 1 720 861
- US-A- 4 219 410

## Beschreibung

Die Erfindung betrifft eine Schüttgutreinigungsvorrichtung nach dem Oberbegriff der unabhängigen Ansprüche.

Schüttgutreinigungsvorrichtungen werden insbesondere bei der Getreideverarbeitung zum Reinigen, Klassieren und/oder Trennen und zur Steinauslese verwendet.

Das Dokument EP-A1-0155556 offenbart eine Schüttgutreinigungsvorrichtung gemäß dem Oberbegriff des Anspruchs 1.

Bekannte Schüttgutreinigungsvorrichtungen umfassen ein Gehäuse mit mindestens einem Sieb. Das Gehäuse wird mittels eines Antriebs in eine Rüttelbewegung versetzt, so dass eine Trennung mittels des Siebs erfolgt. Gleichzeitig wird eine Luftströmung im Gehäuse erzeugt, mit welcher ebenfalls eine Trennung von Partikeln und Staub im Produktstrom erfolgt.

Die Luftströmung wird mittels einer Absaugvorrichtung erzeugt, welche sich neben der Schüttgutreinigungsvorrichtung befindet und mittels Absaugleitungen mit dem Gehäuse verbunden ist. Ein Luftabscheider ist Bestandteil der Absaugvorrichtung.

Durch die Länge der Absaugleitungen ist eine solche Anordnung sehr Energieintensiv im Betrieb. Zudem benötigen solche Schüttgutreinigungsvorrichtungen sehr viel Platz.

Es ist daher Aufgabe der vorliegenden Erfindung eine Vorrichtung anzugeben, welche die Nachteile des Bekannten vermeidet und insbesondere kompakt im Aufbau ist und Energieersparnisse beim Betreiben ermöglicht.

Diese Aufgabe wird mit einer Schüttgutreinigungsvorrichtung nach dem Kennzeichen des unabhängigen Anspruchs 1 gelöst.

Die Schüttgutreinigungsvorrichtung umfasst einen Tragrahmen und ein Siebgehäuse, welches auf dem Tragrahmen mittels Federelementen derart gelagert ist, dass es durch einen Antrieb in eine Schwingung und/oder Vibration versetzbar ist.

Insbesondere handelt es sich bei der Bewegung um eine Rüttelbewegung. Eine Rüttelbewegung im Sinne der vorliegenden Patentanmeldung ist eine Bewegung des Siebgehäuses, bei welcher Schüttgut einer hoppelnden Bewegung verliehen wird. Anders ausgedrückt bedeutet dies, dass Schüttgut von einer Siebfläche eines Siebes in eine Richtung beschleunigt wird, welche nicht in der Ebene der Siebfläche liegt.

Im Siebgehäuse ist wenigstens ein Sieb zum Trennen von Schüttgut in eine erste Fraktion und eine zweite Fraktion angeordnet.

Das Siebgehäuse weist dabei eine Zufuhröffnung für das zu verarbeitende Produkt und wenigstens zwei Auslassöffnungen, jeweils für die erste Fraktion bzw. die zweite Fraktion, auf.

Erfindungsgemäss umfasst die Schüttgutreinigungsvorrichtung ferner einen Luftabscheider, welcher nur am Siebgehäuse befestigt ist, so dass der Luftabscheider ebenfalls durch den Antrieb in eine Schwingung und/oder Vibration versetzbar ist.

Durch die Anordnung des Luftabscheiders direkt an der Schüttgutreinigungsvorrichtung kann die Schüttgutreinigungsvorrichtung kompakter gebaut werden. Zudem sind keine langen Leitungen zum Führen der Luftströmung notwendig. Der Energieverbrauch einer erfindungsgemässen Schüttgutreinigungsvorrichtung ist deshalb im Vergleich zu Schüttgutreinigungsvorrichtungen nach dem Stand der Technik niedriger.

Die Luftströmung wird bevorzugt durch eine externe Absaugvorrichtung erzeugt, welche strömungstechnisch mit dem am Siebgehäuse angeordneten Luftabscheider verbunden ist.

Dadurch kann eine besonders platzsparende Schüttgutreinigungsvorrichtung bereitgestellt werden, da kein externer Abscheider benötigt wird.

Der Luftabscheider ist bevorzugt an einer Oberseite des Siebgehäuses befestigt. Insbesondere ist der Deckel des Siebgehäuses zumindest teilweise als Luftabscheider ausgebildet. Die Luftströmung im Siebgehäuse wird dabei bevorzugt bezüglich eines Produktflusses im Wesentlichen senkrecht geführt. Dies bedeutet, dass die Luftströmung im Wesentlichen senkrecht zu einer Siebfläche eines Siebes geführt wird.

Der Luftabscheider ist bevorzugt ein Fliehkraftabscheider, welcher insbesondere eine Tangentialabsaugung aufweist, welche sich über eine gesamte Länge des Fliehkraftabscheiders erstreckt.

Die Längsrichtung des Fliehkraftabscheiders entspricht der Achsrichtung des Luftstromwirbels, welcher im Fliehkraftabscheider erzeugt wird.

Mit einem Fliehkraftabscheider gemäss der Erfindung kann ein hoher Abscheidegrad erreicht werden.

Die Tangentialabsaugung umfasst bevorzugt wenigstens eine Leitschaufel, welche zur Drallerzeugung der Luftströmung beim Einsaugen ausgebildet ist und die Ausbildung des Luftstromwirbels im Fliehkraftabscheider unterstützt. Bevorzugt sind mehrere Leitschaufeln vorhanden.

Der Fliehkraftabscheider umfasst bevorzugt einen Mantel mit einer rotationssymmetrischen inneren Mantelfläche und ein koaxial dazu angeordnetes inneres Element. Das innere Element ist dabei mit Luftdurchführungsöffnungen versehen und erstreckt sich über die gesamte Länge des Fliehkraftabscheiders.

Die Luftdurchführungsöffnungen des inneren Elements sind bevorzugt über die gesamte Länge des inneren Elements ausgebildet.

Damit kann eine gleichmässige Strömung über die gesamte Länge des Fliehkraftabscheiders erzeugt werden.

Die Luftdurchführungsöffnungen des inneren Elements sind bevorzugt mit Leitelementen versehen, welche eine Umlenkung/Abbremsung der Luftströmung im Raum zwischen dem Mantel und dem inneren Element bewirkt. Die Umlenkung der Luftströmung bewirkt besonders bevorzugt eine Umkehr der Rotationsrichtung der Luftströmung. Dies bedeutet, dass wenn beispielsweise im Raum zwischen dem Mantel und dem inneren Element eine rechtsdrehende Luftströmung durch die Leitschaufeln erzeugt wird, durch die Luftdurchführungsöffnungen des inneren Elements eine linksdrehende Luftströmung im Inneren des inneren Elements oder zumindest im Bereich der Wand des inneren Elements erzeugt wird.

Die innere Mantelfläche und das innere Element sind bevorzugt kegelstumpfförmig ausgebildet.

Damit kann die Luftgeschwindigkeit weitestgehend konstant gehalten werden, so dass Druckverluste über die Länge des Fliehkraftabscheiders minimiert werden, insbesondere wenn der Öffnungswinkel der innere Mantelfläche und des inneren Elements auf die Luftabsaugmenge, Länge des Fliehkraftabscheiders, Ansaugfläche der Tangentialabsaugung usw. angepasst wird.

Der Tragrahmen der Schüttgutreinigungsvorrichtung ist bevorzugt hohl ausgebildet, wobei wenigstens eine Auslassöffnung des Siebgehäuses in den Tragrahmen mündet.

Der Tragrahmen dient dabei gleichzeitig zum Abstützen des Siebgehäuses sowie als Produktführung für wenigstens eine Fraktion. Durch das Führen der Fraktion(en) im Inneren des Tragrahmens kann Platz eingespart werden, da keine zusätzlichen Leitungen notwendig sind. Zudem wird eine Modularität ermöglicht, da mehrere Siebgehäuse übereinander angeordnet werden können, ohne dass zusätzliche Leitungen verlegt werden müssen.

Nicht erfindungsgemäß betrifft die Offenbarung ferner eine Schüttgutreinigungsvorrichtung umfassend einen Tragrahmen und wenigstens zwei Behandlungsvorrichtungen ausgewählt aus einem Trommelsieb, einer Sortier- und Klassiervorrichtung, einem Steinausleser, einem Leichtgutausleser, einem Aspirationskanal/Tarar und einem Magnetabscheider.

Bekannte Schüttgutreinigungsanordnungen umfassen in der Regel mehrere der oben genannten Behandlungsvorrichtungen, welche jedoch separat ausgeführt sind und über Leitungen miteinander verbunden sind. Dementsprechend sind die Platzanforderungen von bekannten Schüttgutreinigungsanordnungen sehr gross.

Es wird eine Vorrichtung angegeben, welche die Nachteile des Bekannten vermeidet und insbesondere kompakt und modular aufbaubar ist.

Hierzu wird eine Schüttgutreinigungsvorrichtung nach dem Kennzeichen des Anspruchs 11 vorgeschlagen.

Als Trommelsieb wird im Sinne der vorliegenden Offenbarung, nicht erfindungsgemäß, eine Vorrichtung bezeichnet, bei welcher Schüttgut über eine Zufuhröffnung in eine rotierende Siebtrommel gelangt, wobei durch Drehung der Siebtrommel das Schüttgut in Drehrichtung etwas aufwärts zu einer offenen Trommel-Stirnseite wandert und dadurch umgeschichtet wird, so dass auch oberen Materialschichten des Schüttguts mit einem Siebmantel des Siebtrommels in Berührung kommen und gesiebt werden, wobei eine erste Fraktion umfassend feineres Schüttgut den Siebmantel passiert, während eine zweite Fraktion umfassend gröbere Teile und Langfasern (z.B. Sackbänder, Maiskolben, Maisblätter usw.) in der sich drehenden Siebtrommel in Bewegung gehalten und zur offenen Trommel-Stirnseite transportiert werden. Die erste Fraktion und die zweite Fraktion verlassen dann die Vorrichtung durch entsprechende Auslassöffnungen.

Als Sortier- und Klassiervorrichtung wird im Sinne der vorliegenden Offenbarung, nicht erfindungsgemäß, eine Vorrichtung bezeichnet, bei welcher Schüttgut, welches der Vorrichtung über eine Zufuhröffnung zugeführt wird, mithilfe eines Trennsystems aus Sieben eine erste Fraktion umfassend Schüttgüter, insbesondere körnige Nahrungsmittelprodukte wie Getreide, von groben Beimengungen wie grossen Körnern, Schnüren, Stroh, Holz, Steinen oder Erdklumpen und feinen Verunreinigungen wie Sand und Bruch, welche eine zweite Fraktion darstellen, getrennt werden. Die erste Fraktion und die zweite Fraktion verlassen dann die Vorrichtung durch entsprechende Auslassöffnungen.

Als Steinausleser wird im Sinne der vorliegenden Offenbarung, nicht erfindungsgemäß, eine Vorrichtung bezeichnet, bei welcher Schüttgut, welches der Vorrichtung über eine Zufuhröffnung zugeführt wird, mithilfe einer oszillierenden Bewegung eines Vortrenntisches und von unten nach oben durchströmender Luft nach spezifischem Gewicht geschichtet wird. Leichtteile und Schwerteile (mit den Steinen) verlassen dann die Vorrichtung durch entsprechende Auslassöffnungen.

Als Leichtgutausleser wird im Sinne der vorliegenden Offenbarung, nicht erfindungsgemäß, eine Vorrichtung bezeichnet, bei welcher Schüttgüter, insbesondere körnige Nahrungsmittelprodukte wie Getreide, in mehrere Fraktionen (z.B. Schwer-, Misch- und Leichtprodukt) klassiert und getrennt werden. Die Klassierung und Trennung erfolgt mittels einer Luftströmung, welche das über eine Zufuhröffnung der Vorrichtung zugeführte Schüttgut nach spezifischem Gewicht in mehrere Fraktionen (z.B. Schwer-, Misch- und Leichtprodukt) aufteilt. Die Fraktionen verlassen dann die Vorrichtung durch entsprechende Auslassöffnungen.

Als Aspirationskanal/Tarar wird im Sinne der vorliegenden Offenbarung, nicht erfindungsgemäß, eine Vorrichtung bezeichnet, bei welcher durch regulierbare Luftverteilung Schüttgut, welches über eine Zufuhröffnung der Vorrichtung zugeführt wird, von Leichtteilen befreit wird. Schüttgut und Leichtteile verlassen dann die Vorrichtung durch entsprechende Auslassöffnungen.

Als Magnetabscheider wird im Sinne der vorliegenden Offenbarung, nicht erfindungsgemäß, eine Vorrichtung bezeichnet, bei welcher durch Magnete Schüttgut, welches über eine Zufuhröffnung der Vorrichtung zugeführt wird, von Metallteilen befreit wird. Schüttgut und Metallteile verlassen dann die Vorrichtung durch entsprechende Auslassöffnungen.

Wie oben beschrieben umfasst jede Behandlungsvorrichtung wenigstens eine Zufuhröffnung und wenigstens eine Auslassöffnung.

Nicht erfindungsgemäß sind die Behandlungsvorrichtungen auf dem Tragrahmen gelagert, wobei die Lagerung direkt oder indirekt, z.B. mittels Federelementen, erfolgen kann.

Der Tragrahmen ist dabei zumindest bereichsweise hohl ausgebildet.

Wenigstens eine Auslassöffnung einer Behandlungsvorrichtung mündet erfindungsgemäss in den Tragrahmen, wobei der Tragrahmen in die Zufuhröffnung einer Behandlungsvorrichtung ebenfalls mündet. Bevorzugt mündet die Auslassöffnung einer ersten Behandlungsvorrichtung in den Tragrahmen, wobei der Tragrahmen in die Zufuhröffnung einer zweiten Behandlungsvorrichtung, welche stromabwärts der ersten Behandlungsvorrichtung angeordnet ist, mündet. Der Tragrahmen dient somit als Verbindungsleitung zwischen der Auslassöffnung der ersten Behandlungsvorrichtung und der Zufuhröffnung der zweiten Behandlungsvorrichtung.

Es ist jedoch ersichtlich, dass beliebige Kombinationen möglich sind. Beispielsweise können drei Behandlungsvorrichtungen am Tragrahmen gelagert werden, wobei zwei Fraktionen, welche von der ersten Behandlungsvorrichtung voneinander getrennt worden sind, jeweils zu einer zweiten bzw. dritten Behandlungsvorrichtung über den hohl ausgebildeten Tragrahmen geleitet werden (die erste Fraktion zur zweiten Behandlungsvorrichtung und die zweite Fraktion zur dritten Behandlungsvorrichtung). Auch kann der Tragrahmen derart ausgebildet sein, dass mehrere Verbindungsleitungen darin begrenzt werden, so dass unterschiedliche Fraktionen zu unterschiedlichen Behandlungsvorrichtungen geleitet werden können, oder Fraktionen aus unterschiedlichen Behandlungsvorrichtungen im gleichen Tragrahmen geleitet werden können.

Somit kann eine modulare Schüttgutreinigungsvorrichtung bereitgestellt werden, bei welcher mit einem standardmässig ausgeführten Tragrahmen mehrere Behandlungsvorrichtungen miteinander strömungstechnisch verbindbar sind. Die Notwendigkeit der Verlegung von separaten Verbindungsleitungen entfällt dabei.

Die Erfindung wird nachfolgend anhand eines bevorzugten Ausführungsbeispiels in Verbindung mit den Figuren besser beschrieben. Es zeigen:
- Fig. 1: eine perspektivische Schnittansicht durch eine erfindungsgemässe Schüttgutreinigungsvorrichtung;

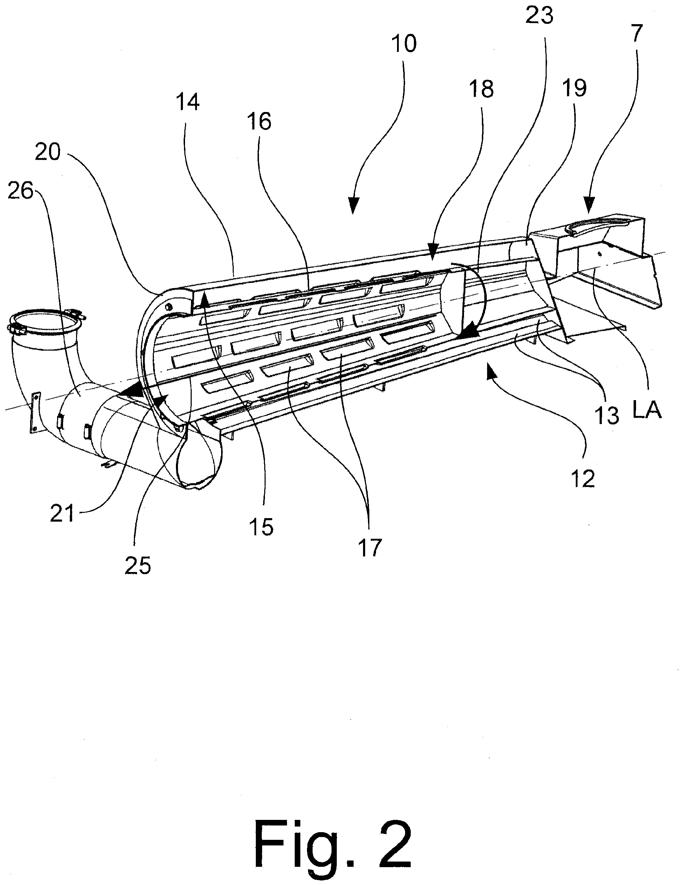

- Fig. 2: eine perspektivische Detailansicht in Längsschnitt durch einen Luftabscheider der Schüttgutreinigungsvorrichtung der Figur 1;
- Fig. 3: eine Ansicht im Querschnitt durch einen Luftabscheider der Schüttgutreinigungsvorrichtung der Figur 1, und
- Fig. 4: eine perspektivische Ansicht einer Variante der erfindungsgemässen Schüttgutreinigungsvorrichtung,
- Fig. 5: eine Detailansicht der Schüttgutreinigungsvorrichtung der Figur 4, und
- Fig. 6: eine schematische Seitenansicht einer weiteren nicht erfindungsgemässen Schüttgutreinigungsvorrichtung.

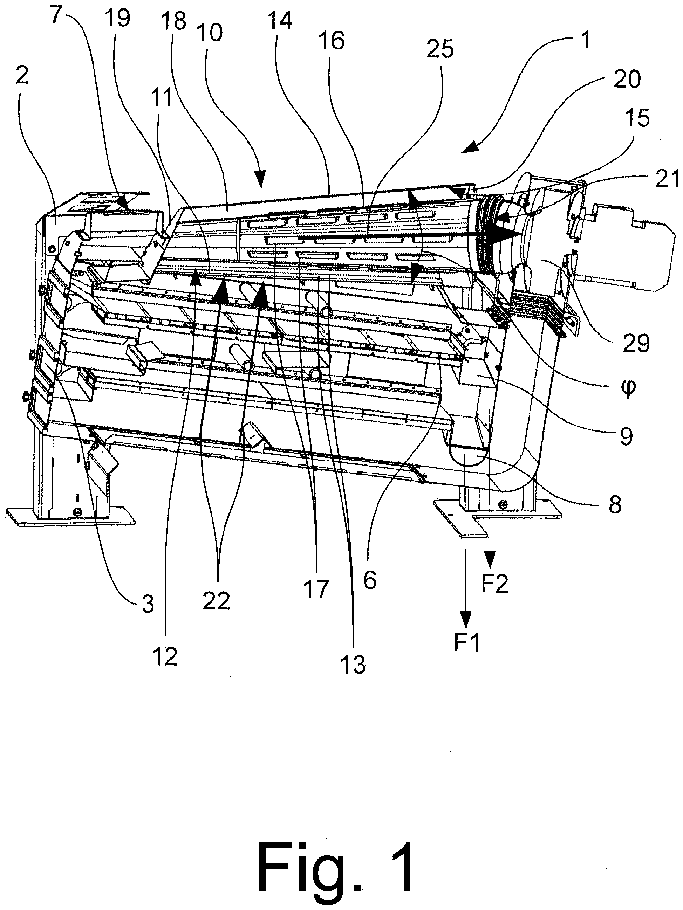

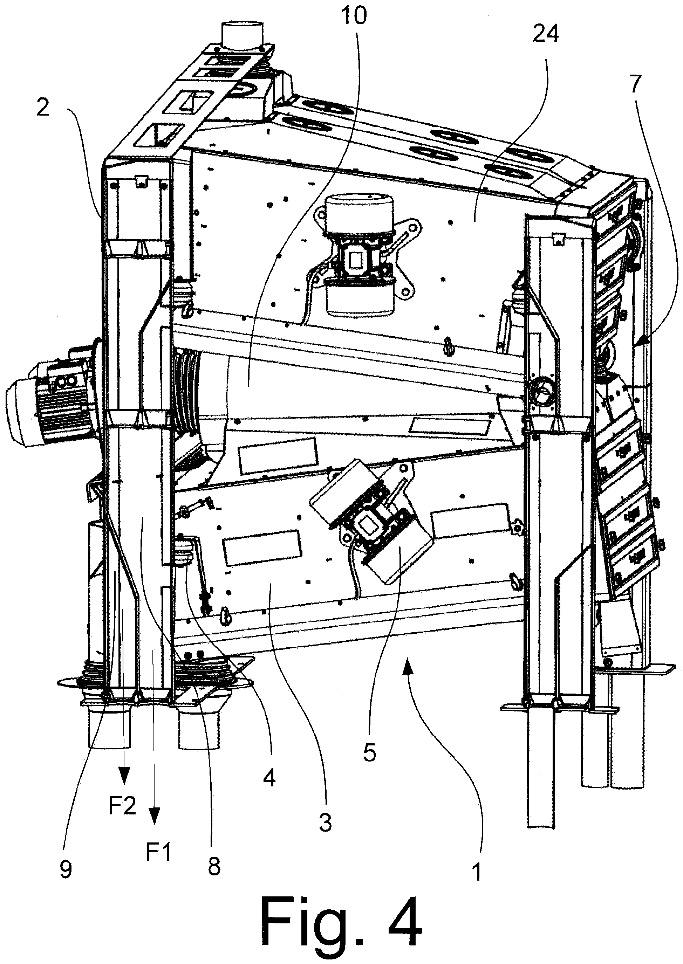

In der Figur 1 ist eine Schüttgutreinigungsvorrichtung 1 gezeigt. Die Schüttgutreinigungsvorrichtung 1 umfasst einen Tragrahmen 2, welcher ein Siebgehäuse 3 trägt. Das Siebgehäuse 3 ist auf nicht sichtbaren Federelementen gelagert und kann mittels eines nicht dargestellten Antriebs in eine Rüttelbewegung versetzt werden. Ein Federelement 4 und der Antrieb 5 sind in der Figur 4 sichtbar.

Im Inneren des Siebgehäuses ist ein Sieb 6 angeordnet. Schüttgut wird der Schüttgutreinigungsvorrichtung 1 durch die Zufuhröffnung 7 zugeführt und in eine erste Fraktion F1 und eine zweite Fraktion F2 getrennt, welche die Schüttgutreinigungsvorrichtung 1 durch die Auslässe 8 und 9 verlassen.

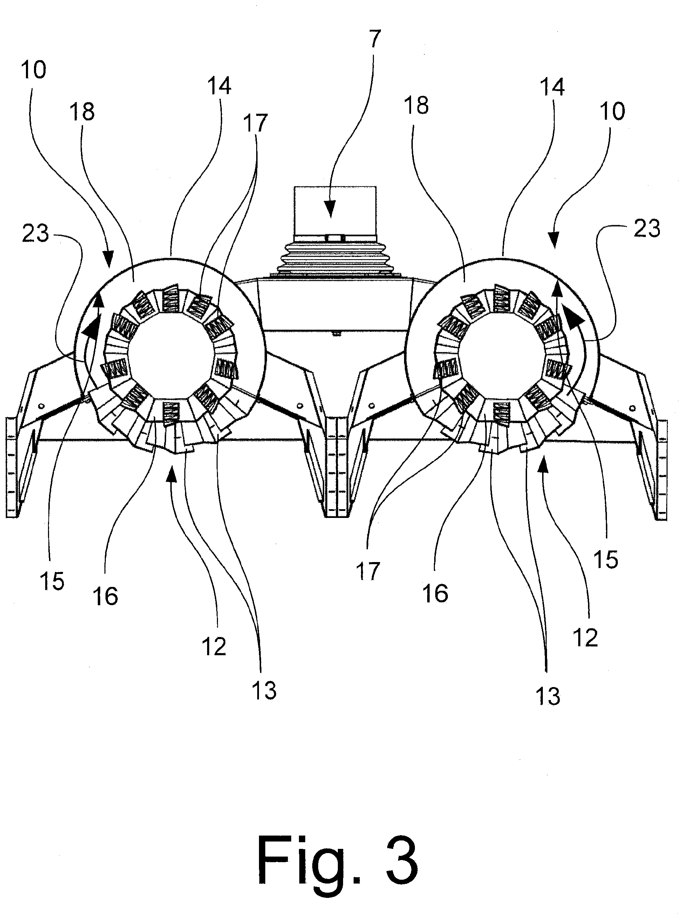

An einer Oberseite 11 des Siebgehäuses 3 sind zwei Luftabscheider 10 nebeneinander angeordnet, welche in der Figur 3 gesondert dargestellt sind.

Der Luftabscheider 10 ist als Abdeckung der Schüttgutreinigungsvorrichtung 1 ausgebildet und umfasst einen Mantel 14 mit einer kegelstumpfförmigen inneren Mantelfläche 15 mit einem Öffnungswinkel ϕ. Im Inneren des Mantels 14 und koaxial dazu ist ein inneres kegelstumpfförmiges Element 16 angeordnet, welches sich über die gesamte Länge des Mantels 14 erstreckt. Die Längsrichtung des Mantels 14 und des inneren Elements 16 wird durch die Längsachse LA definiert.

Das innere Element 16 weist ebenfalls einen Öffnungswinkel ϕ auf, so dass zwischen Mantelfläche 15 und dem inneren Element 16 ein Ringraum 18 mit konstanter radialer Spaltbreite gebildet wird.

Die Deckfläche 19 des Mantels 14 ist geschlossen, während die Grundfläche des Mantels 14 durch einen Ring 20 nur teilweise verschlossen wird und eine Öffnung 21 mit dem Durchmesser der Grundfläche des inneren Elements 16 freigibt.

Das innere Element 16 ist mit Luftdurchführungsöffnungen 17 versehen. Der Bereich des Mantels 14, welcher dem Innenraum des Siebgehäuses 3 zugewandt ist, dient als Tangentialabsaugung 12 und weist eine Mehrzahl von Leitschaufeln 13 auf.

Beim Betreiben der Schüttgutreinigungsvorrichtung 1 wird an der Öffnung 21 ein Unterdruck durch eine Absaugvorrichtung 26 und/oder ein Radialventilator 29 erzeugt, welche nur schematisch in der Figur 1 dargestellt sind. Luft im Innenraum des Siebgehäuses 3 strömt somit von unten her in Richtung der Oberseite 11, wie durch die Pfeile 22 schematisch dargestellt und nimmt leichtere Partikel mit.

Die Leitschaufeln 13 bewirken eine Umlenkung des Luftstromes und erzeugen einen Drall im Ringraum 18, so dass eine Wirbelströmung im Ringraum 18 entsteht, welche durch den Pfeil 23 schematisch dargestellt ist. Durch die Wirbelströmung werden die Partikel zentrifugal von der Luftströmung getrennt und werden dann über die Leitung 26 entweder einem weiteren Prozess unterzogen oder als Abfall gesammelt.

Die gereinigte Luftströmung strömt durch die Luftdurchführungsöffnungen 17, welche ebenfalls mit Leitblechen versehen sind, die eine Umlenkung der Luftströmung bewirken, und erreicht die Öffnung 21, wie durch den Pfeil 25 schematisch dargestellt, wo sie entweder nach Aussen geleitet wird oder dem Siebkasten wieder zugeführt wird.

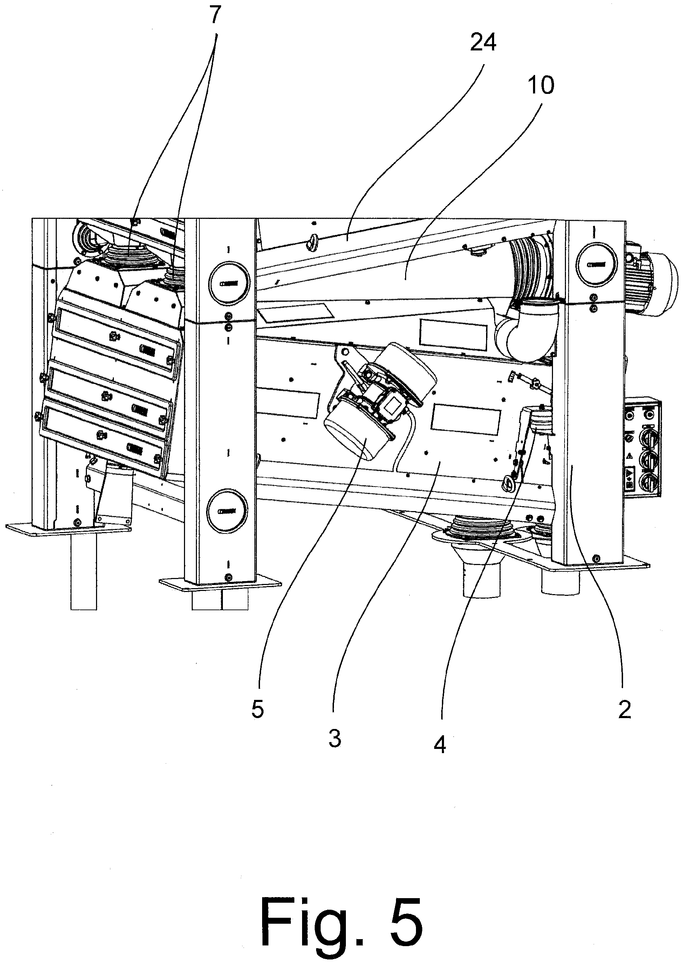

In den Figuren 4 und 5 ist eine Variante der Schüttgutreinigungsvorrichtung 1 gezeigt, bei welcher ein Federelement 4 und der Antrieb 5 sichtbar sind. Die Schüttgutreinigungsvorrichtung 1 ist wie oben beschrieben ausgebildet, wobei im Unterschied zur oben beschriebenen Schüttgutreinigungsvorrichtung 1 die Auslassöffnungen 8 und 9 in einem Hohlraum des Tragrahmens 2 münden, so dass keine externen Leitungen notwendig sind. Dies ist schematisch in der Figur 4 gezeigt, wonach im Tragrahmen 2 zwei Kanäle für die Fraktionen F1 und F2 ausgebildet sind. Insbesondere kann eine weitere Vorrichtung 24, welche eine Schüttgutreinigungsvorrichtung 1 sein kann, oberhalb der Schüttgutreinigungsvorrichtung 1 angeordnet werden, ohne dass zusätzliche Leitungen verlegt werden müssen.

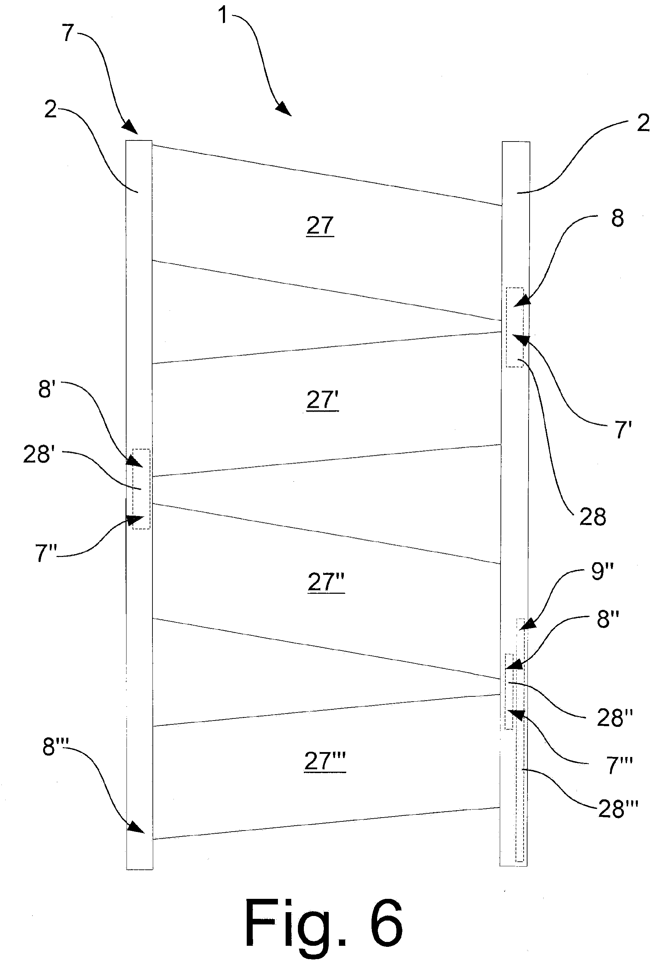

In der Figur 6 ist eine Schüttgutreinigungsvorrichtung 1 schematisch dargestellt.

Die Schüttgutreinigungsvorrichtung 1 umfasst mehrere Behandlungsvorrichtungen 27, 27', 27" und 27"', welche auf einem Tragrahmen 2 gelagert sind. Die Lagerung kann wie oben beschrieben mittels Federelementen oder direkt, z.B. mittels Schrauben oder Bolzen, erfolgen.

Die Behandlungsvorrichtung 27, 27', 27" oder 27'" kann ein Trommelsieb, eine Sortier- und Klassiervorrichtung, ein Steinausleser, ein Leichtgutausleser, ein Aspirationskanal/Tarar oder ein Magnetabscheider sein.

Jede Behandlungsvorrichtung 27, 27', 27" oder 27'" weist jeweils wenigstens eine Zufuhröffnung 7, 7', 7" bzw. 7'" und eine Auslassöffnung 8, 8', 8", 9" bzw. 8''' auf.

Da die Zufuhröffnungen 7, 7', 7" und 7'" und die Auslassöffnungen 8, 8', 8", 9" und 8'" sich in einem vom Tragrahmen 2 abgedeckten Bereich befinden, sind diese lediglich mit einem Pfeil angedeutet.

Der Tragrahmen 2 ist hohl ausgebildet. Die Auslassöffnung 8 der Behandlungsvorrichtung 27 mündet in den Tragrahmen 2. Der Tragrahmen 2 wiederum mündet in die Zufuhröffnung 7' der Behandlungsvorrichtung 27', welche stromabwärts der Behandlungsvorrichtung 27 in Produktflussrichtung angeordnet ist. Eine Verbindungsleitung 28, welche die Auslassöffnung 8 mit der Zufuhröffnung 7' strömungstechnisch verbindet und schematisch durch die gestrichelte Linie dargestellt ist, wird somit von dem hohlen Tragrahmen 2 ausgebildet.

Stromabwärts der Behandlungsvorrichtung 27' ist eine weitere Behandlungsvorrichtung 27" am Tragrahmen 2 angeordnet. Analog zum oben beschriebenen Beispiel sind die Auslassöffnung 8' der Behandlungsvorrichtung 27' und die Zufuhröffnung 7" der Behandlungsvorrichtung 27" über eine Verbindungsleitung 28' strömungstechnisch verbunden, welche von einem Abschnitt des hohlen Tragrahmen 2 ausgebildet wird.

Stromabwärts der Behandlungsvorrichtung 27" ist eine weitere Behandlungsvorrichtung 27''' am Tragrahmen 2 angeordnet. In diesem Fall weist die Behandlungsvorrichtung 27" zwei Auslassöffnungen 8" und 9" auf, welche in den Tragrahmen 2 münden, wobei der hohle Tragrahmen 2 zwei parallel verlaufende Verbindungsleitungen 28" und 28'" ausbildet. Die Verbindungsleitung 28" verbindet die Auslassöffnung 8" der Behandlungsvorrichtung 27" mit der Zufuhröffnung 7'" der Behandlungsvorrichtung 27'''. Die Auslassöffnung 9" mündet in die Verbindungsleitung 28"'. Die Verbindungsleitung 28'" kann beispielsweise als Abfallleitung dienen oder zu einer weiteren, stromabwärts der Behandlungsvorrichtung 27'" angeordneten, Behandlungsvorrichtung führen.

Es ist somit ersichtlich, dass je nach Wahl der unterschiedlichen Behandlungsvorrichtungen 27, 27', 27" und 27'" der Tragrahmen 2 eine Flexibilität und Modularität des Aufbaus der Schüttgutreinigungsvorrichtung 1 ermöglicht.

## Patentansprüche

1. Schüttgutreinigungsvorrichtung (1) umfassend:
einen Tragrahmen (2) und
ein Siebgehäuse (3), welches auf dem Tragrahmen mittels Federelementen (4) derart gelagert ist, dass es durch einen Antrieb (5) in eine Schwingung und/oder Vibration versetzbar ist,
wobei im Siebgehäuse (3) wenigstens ein Sieb (6) angeordnet ist zum Trennen von Schüttgut in eine erste Fraktion (F1) und eine zweite Fraktion (F2),
wobei das Siebgehäuse eine Zufuhröffnung (7) und wenigstens zwei Auslassöffnungen (8, 9), jeweils für die erste Fraktion (F1) bzw. die zweite Fraktion (F2), aufweist, **dadurch gekennzeichnet, dass** die Schüttgutreinigungsvorrichtung (1) ferner einen Luftabscheider (10) umfasst, welcher nur am Siebgehäuse (3) befestigt ist, so dass der Luftabscheider (10) ebenfalls durch den Antrieb (5) in eine Schwingung und/oder Vibration versetzbar ist.

2. Schüttgutreinigungsvorrichtung (1) nach Anspruch 1, **dadurch gekennzeichnet, dass** der Luftabscheider (10) an einer Oberseite (11) des Siebgehäuses (3) befestigt ist.

3. Schüttgutreinigungsvorrichtung (1) nach Anspruch 1 oder 2, **dadurch gekennzeichnet, dass** der Luftabscheider (10) ein Fliehkraftabscheider ist.

4. Schüttgutreinigungsvorrichtung (1) nach Anspruch 3, **dadurch gekennzeichnet, dass** der Fliehkraftabscheider (10) eine Tangentialabsaugung (12) über eine gesamte Länge des Fliehkraftabscheiders (10) aufweist.

5. Schüttgutreinigungsvorrichtung (1) nach Anspruch 4, **dadurch gekennzeichnet, dass** die Tangentialabsaugung (12) wenigstens eine Leitschaufel (13) umfasst, welche zur Drallerzeugung einer Luftströmung ausgebildet ist.

6. Schüttgutreinigungsvorrichtung (1) nach einem der Ansprüche 3 bis 5, **dadurch gekennzeichnet, dass** der Fliehkraftabscheider (10) einen Mantel (14) mit einer rotationssymmetrischen inneren Mantelfläche (15) und ein koaxial dazu angeordnetes inneres Element (16) mit Luftdurchführungsöffnungen (17) umfasst, wobei das innere Element (16) sich über die gesamte Länge des Fliehkraftabscheiders (10) erstreckt.

7. Schüttgutreinigungsvorrichtung (1) nach Anspruch 6, **dadurch gekennzeichnet, dass** die Luftdurchführungsöffnungen (17) des inneren Elements (16) über die gesamte Länge des inneren Elements (16) ausgebildet sind.

8. Schüttgutreinigungsvorrichtung (1) nach Anspruch 6 oder 7, **dadurch gekennzeichnet, dass** die innere Mantelfläche (15) und das innere Element (16) kegelstumpfförmig ausgebildet sind.

9. Schüttgutreinigungsvorrichtung nach Anspruch 6, 7 oder 8, **dadurch gekennzeichnet, dass** die Luftdurchführungsöffnungen (17) mit Leitelementen versehen sind, welche eine Umlenkung der Luftströmung, insbesondere eine Umkehr der Rotationsrichtung der Luftströmung, bewirken.

10. Schüttgutreinigungsvorrichtung nach einem der vorhergehenden Ansprüche, **dadurch gekennzeichnet, dass** der Tragrahmen (2) hohl ausgebildet ist und wenigstens eine Auslassöffnung (8, 9) in den Tragrahmen (2) mündet.

11. Schüttgutreinigungsvorrichtung nach einem der vorhergehenden Ansprüche, umfassend:
wenigstens zwei Behandlungsvorrichtungen (27, 27') ausgewählt aus einem Trommelsieb, einer Sortier- und Klassiervorrichtung, einem Steinausleser, einem Leichtgutausleser, einem Aspirationskanal/Tarar und einem Magnetabscheider,
wobei jede Behandlungsvorrichtung (27, 27') wenigstens eine Zufuhröffnung (7) und wenigstens eine Auslassöffnung (8) umfasst,
wobei die Behandlungsvorrichtungen (27, 27') auf dem Tragrahmen (2) gelagert sind,
der Tragrahmen (2) hohl ausgebildet ist,
wenigstens eine Auslassöffnung (7) einer Behandlungsvorrichtung (27, 27') in den Tragrahmen (2) mündet, und
der Tragrahmen (2) in die Zufuhröffnung (8) einer Behandlungsvorrichtung (27, 27') mündet.

12. Schüttgutreinigungsvorrichtung nach Anspruch 11, **dadurch gekennzeichnet, dass** die Auslassöffnung (8) einer ersten Behandlungsvorrichtung (27) in den Tragrahmen (2) mündet, und der Tragrahmen (2) in die Zufuhröffnung (7') einer zweiten Behandlungsvorrichtung (27'), welche stromabwärts der ersten Behandlungsvorrichtung (27) angeordnet ist, mündet, wobei der Tragrahmen (2) als Verbindungsleitung (28) zwischen der Auslassöffnung (8) der ersten Behandlungsvorrichtung (27) und der Zufuhröffnung (7') der zweiten Behandlungsvorrichtung (27') dient.

## Claims

1. Bulk material cleaning device (1) comprising:
a support frame (2) and
a screen housing (3) which is mounted on the support frame by means of spring elements (4) in such a way that it can be set in oscillation and/or vibration by a drive (5),
wherein at least one screen (6) is arranged in the screen housing (3) for separating bulk material into a first fraction (F1) and a second fraction (F2),
wherein the screen housing has a feed opening (7) and at least two outlet openings (8, 9), respectively for the first fraction (F1) and the second fraction (F2), **characterized in that** the bulk material cleaning device (1) further comprises an air separator (10) which is only attached to the screen housing (3), so that the air separator (10) can also be set into oscillation and/or vibration by the drive (5).

2. Bulk material cleaning device (1) according to claim 1, **characterized in that** the air separator (10) is attached to an upper side (11) of the screen housing (3).

3. Bulk material cleaning device (1) according to claim 1 or 2, **characterized in that** the air separator (10) is a centrifugal separator.

4. Bulk material cleaning device (1) according to claim 3, **characterized in that** the centrifugal separator (10) comprises a tangential suction (12) over an entire length of the centrifugal separator (10).

5. Bulk material cleaning device (1) according to claim 4, **characterized in that** the tangential suction (12) comprises at least one guide vane (13) which is designed to generate a swirl of an air flow.

6. A bulk material cleaning device (1) according to any one of claims 3 to 5, **characterized in that** the centrifugal separator (10) comprises a jacket (14) having a rotationally symmetrical inner jacket surface (15) and an inner element (16) that is arranged coaxially thereto and has air passage openings (17), the inner element (16) extending over the entire length of the centrifugal separator (10).

7. Bulk material cleaning device (1) according to claim 6, **characterized in that** the air passage openings (17) of the inner element (16) are formed over the entire length of the inner element (16).

8. Bulk material cleaning device (1) according to claim 6 or 7, **characterized in that** the inner jacket surface (15) and the inner element (16) are frustoconical.

9. Bulk material cleaning device according to claim 6, 7 or 8, **characterized in that** the air passage openings (17) are provided with guide elements which effect a deflection of the air flow, in particular a reversal of the direction of rotation of the air flow.

10. Bulk material cleaning device according to one of the preceding claims, **characterized in that** the support frame (2) is hollow and at least one outlet opening (8, 9) opens into the support frame (2).

11. Bulk material cleaning device according to one of the preceding claims, comprising:
at least two treatment devices (27, 27') selected from a drum screen, a sorting and classifying device, a stone sorting device, a light material separator, an aspiration channel/tarar and a magnetic separator,
wherein each treatment device (27, 27') comprises at least one feed opening (7) and at least one outlet opening (8),
wherein the treatment devices (27, 27') are mounted on the support frame (2),
the support frame (2) is hollow,
at least one outlet opening (7) of a treatment device (27, 27') opens into the support frame (2), and
the support frame (2) opens into the feed opening (8) of a treatment device (27, 27').

12. Bulk material cleaning device according to claim 11, **characterized in that** the outlet opening (8) of a first treatment device (27) opens into the support frame (2), and
the support frame (2) opens into the feed opening (7') of a second treatment device (27') arranged downstream of the first treatment device (27), the support frame (2) serving as a connecting line (28) between the outlet opening (8) of the first treatment device (27) and the feed opening (7') of the second treatment device (27').

## Revendications

1. Dispositif de nettoyage de matières en vrac (1) comprenant
un cadre de support (2) et
un boîtier de tamis (3) qui est monté sur le cadre de support au moyen d'éléments de ressort (4) de telle sorte qu'il peut être mis en oscillation et/ou en vibration par un entraînement (5),
dans lequel au moins un tamis (6) est disposé dans le boîtier de tamis (3) pour séparer le matériau en vrac en une première fraction (F1) et une seconde fraction (F2),
dans lequel le boîtier de tamis présente une ouverture d'entrée (7) et au moins deux ouvertures de sortie (8, 9), respectivement pour la première fraction (F1) et la deuxième fraction (F2), **caractérisé en ce que** le dispositif de nettoyage de matières en vrac (1) comprend en outre un séparateur d'air (10) qui est uniquement fixé au boîtier de tamis (3), de sorte que le séparateur d'air (10) peut également être mis en oscillation et/ou en vibration par l'entraînement (5).

2. Dispositif de nettoyage de matières en vrac (1) selon la revendication 1, **caractérisé en ce que** le séparateur d'air (10) est fixé à un côté supérieur (11) du boîtier de tamis (3) .

3. Dispositif de nettoyage de matières en vrac (1) selon la revendication 1 ou 2, **caractérisé en ce que** le séparateur d'air (10) est un séparateur centrifuge.

4. Dispositif de nettoyage de matières en vrac (1) selon la revendication 3, **caractérisé en ce que** le séparateur centrifuge (10) présente une aspiration tangentielle (12) sur toute une longueur du séparateur centrifuge (10).

5. Dispositif de nettoyage de matières en vrac (1) selon la revendication 4, **caractérisé en ce que** l'aspiration tangentielle (12) comprend au moins une ailette de guidage (13) qui est conçue pour générer un tourbillon d'écoulement d'air.

6. Dispositif de nettoyage de matières en vrac (1) selon l'une quelconque des revendications 3 à 5, **caractérisé en ce que** le séparateur centrifuge (10) comprend une enveloppe (14) ayant une surface d'enveloppe intérieure à symétrie de rotation (15) et un élément intérieur (16) disposé coaxiale- ment à celle-ci et ayant des ouvertures de passage d'air (17), l'élément intérieur (16) s'étendant sur toute la longueur du séparateur centrifuge (10).

7. Dispositif de nettoyage de matières en vrac (1) selon la revendication 6, **caractérisé en ce que** les ouvertures de passage d'air (17) de l'élément intérieur (16) sont formées sur toute la longueur de l'élément intérieur (16).

8. Dispositif de nettoyage de matières en vrac (1) selon la revendication 6 ou 7, **caractérisé en ce que** la surface circonférentielle intérieure (15) et l'élément intérieur (16) sont tronconiques.

9. Dispositif de nettoyage de matières en vrac selon la revendication 6, 7 ou 8, **caractérisé en ce que** les ouvertures de passage d'air (17) sont munies d'éléments de guidage qui effectuent une déviation du flux d'air, en particulier une inversion du sens de rotation du flux d'air.

10. Dispositif de nettoyage de matières en vrac selon l'une des revendications précédentes, **caractérisé en ce que** le cadre de support (2) est creux et au moins une ouverture de sortie (8, 9) débouche dans le cadre de support (2).

11. Dispositif de nettoyage de matières en vrac selon l'une quelconque des revendications précédentes, comprenant :
au moins deux dispositifs de traitement (27, 27') choisis parmi un tamis trommel, un dispositif de tri et de classification, un épierreur, un séparateur de matières légères, un canal d'aspiration/tartre et un séparateur magnétique,
chaque dispositif de traitement (27, 27') comprenant au moins une ouverture d'entrée (7) et au moins une ouverture de sortie (8),
dans lequel les dispositifs de traitement (27, 27') sont montés sur le cadre de support (2),
le cadre de support (2) est creux,
au moins une ouverture de sortie (7) d'un dispositif de traitement (27, 27') débouche dans le cadre de support (2), et
le cadre de support (2) débouche dans l'ouverture d'entrée (8) d'un dispositif de traitement (27, 27').

12. Dispositif de nettoyage de matières en vrac selon la revendication 11, **caractérisé en ce que** l'ouverture de sortie (8) d'un premier dispositif de traitement (27) débouche dans le cadre de support (2), et
le cadre de support (2) débouche dans l'ouverture d'entrée (7') d'un deuxième dispositif de traitement (27') disposé en aval du premier dispositif de traitement (27), le cadre de support (2) servant de conduit de liaison (28) entre l'ouverture de sortie (8) du premier dispositif de traitement (27) et l'ouverture d'entrée (7') du deuxième dispositif de traitement (27').
